# EUROPEAN PATENT APPLICATION

(11) **EP 4 614 111 A1**
(43) Date of publication of application: **10.09.2025**
(21) Application number: 24162364.4
(22) Date of filing: 08.03.2024
(51) Int. Cl.: G01C 21/20, G01C 21/34, G01C 21/36, B63B 79/40, G06Q 10/047

(54) **MODIFYING A SHIP ROUTE**

(71) Applicant: ABB SCHWEIZ AG, 5400 Baden (CH)
(72) Inventor: LINDER, Jonas, 464 93 Mellerud (SE); TERVO, Kalevi, 02720 Espoo (FI)
(74) Representative: Kransell & Wennborg KB

(57) **Abstract**

The present disclosure relates to modifying a ship route, comprising: at a user interface, presenting a map (2) comprising a proposed future route (1a) for a ship (3); via the user interface, receiving input from a user, the input including at least one request for modifying a route property of the presented route and/or at least one request for modifying a predefined constraint on a ship property among a plurality of predefined constraints on ship properties; at a processing device, recalculating the proposed route based on the received request(s) and on the predefined constraints on ship properties; and, at the user interface, presenting the recalculated route (1b) on the map.

## Description

### TECHNICAL FIELD

The present disclosure relates to modifying a ship route by a user using a user interface (UI).

### BACKGROUND

Positioning a ship safely is at the heart of ship operation and the choice of how to operate the ship is partially down to personal preferences of the crew. As the motion control systems (MCS) of ships get more advanced, more decisions will be taken by the system and suggestions or actions will be presented to the user. Trajectory planning is one feature that will be part of the MCS in the short term. Finding trajectories that are a trade-off between time and energy optimality will increase fuel efficiency but will not necessarily make the safest choices. A reason might be that not all aspects considered by the crew are captured in the description of the planning problem or that the safer manoeuvring is a trade-off from energy optimality, e.g. shortening and straightening the path will decrease energy usage but may lead to the path running closer to the shore. This might be fine in many cases but might, for instance, not be desired on a particularly windy day when the crew might want additional safety margins. Another example is if the crew prefers to take a totally different path, for instance, on the other side of an island. This implies that the automated solution will likely present trajectories that the crew disagrees with and which might decrease trust in the system and ultimately lead to disabling of or not using the provided solution from the MCS.

EP 4 105 602 discloses navigation planning where waypoints can be moved on an electronic chart to optimize a navigation route.

### SUMMARY

It is an objective of the present invention to provide an improved way of adjusting a future ship route via a user interface.

According to an aspect of the present invention, there is provided a method of modifying a ship route. The method comprises, at a user interface, presenting a map comprising a proposed future route for a ship. The method also comprises, via the user interface, receiving input from a user, the input including at least one request for modifying a route property of the presented route and/or at least one request for modifying a predefined constraint on a ship property among a plurality of predefined constraints on ship properties. The method also comprises, at a processing device, recalculating the proposed route based on the received request(s) and on the predefined constraints on ship properties. The method also comprises, at the user interface, presenting the recalculated route on the map.

According to another aspect of the present invention, there is provided a processing device comprising processing circuitry, and storage storing instructions executable by said processing circuitry to cause a system comprising the processing device to perform an embodiment of the method of the present disclosure.

According to another aspect of the present invention, there is provided a system comprising an embodiment of the processing device of the present disclosure, and the user interface.

According to another aspect of the present invention, there is provided a computer program product comprising computer-executable components for causing a system to perform an embodiment of the method of the present disclosure when the computer-executable components are run on processing circuitry comprised in the system.

By recalculating the route based both on the user requests and on the ship properties, a route which is satisfactory both to the system, e.g. MCS, and to the user can more easily be obtained. This is in contrast to legacy systems where a route is proposed, which is unsatisfactory to the user why the user moves waypoints to force the route through said waypoints, resulting in a route which may be unsatisfactory in view of the ship properties e.g. turning or acceleration abilities.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic top view of a user interface presenting a map comprising a proposed future route for a ship as well as a recalculated route, in accordance with some embodiments of the present invention.
Fig 2 is a schematic block diagram of a system in accordance with some embodiments of the present invention.
Fig 3 is a schematic flow chart of a method in accordance with some embodiments of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

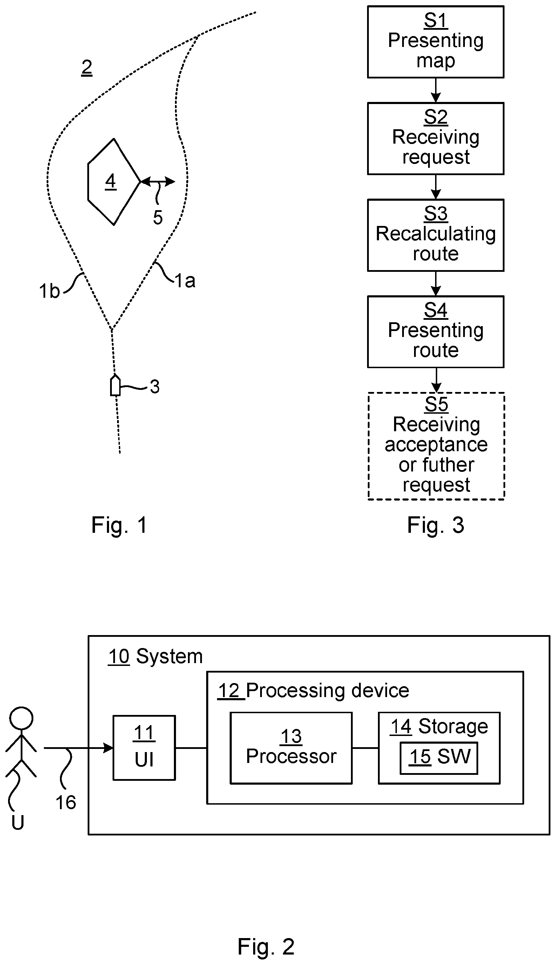

Figure 1 illustrates a map 2, e.g. as presented on a UI, typically a Graphical User Interface (GUI), of a system e.g. an MCS. On the map 2, a future route 1 of a ship 3 is presented. For instance, a proposed future route 1a for the ship 3 and/or a recalculated route 1b may be presented in the map 2.

Additionally, geographical or other obstacle(s) 4 may be presented in the map 2. Such an obstacle 4 may e.g. be a stationary geographical obstacle such as a shallow, island or islet, or a shoreline, or be any other area, stationary or moving, unsuitable or forbidden for the ship to pass through or nearby. An obstacle 4 may be defined by the user or be predefined in the map by the system. Additionally or alternatively, the obstacle 4 may be physical or virtual, e.g. a protected area forbidden to the ship or defined by the user. Additionally or alternatively, the obstacle 4 may be stationary, e.g. a geographical or manmade stationary obstacle, or moving/movable, e.g. another ship. In some embodiments of the present invention, an obstacle 4 is a stationary obstacle such as a shoreline, shallow water, island, islet or manmade structure.

Additionally or alternatively, allowed areas (not shown), e.g. corresponding to a shipping lane or other bodies of water allowed for the ship 3 to pass through and/or having a sufficient depth for the ship, or defined by the user, may be presented in the map 2. In contrast to an obstacle 4, an allowed area defines where the ship route 1 may pass rather than where it should not pass.

Additionally or alternatively, a safety distance 5 may be associated with an obstacle 4, or with an allowed area, in the map 2. A safety distance 5 associated with an obstacle may indicate the smallest allowed distance between the route 1 and the obstacle, e.g. any point on the periphery of the obstacle 4 or the safety distance is associated with a specific point on said periphery. A safety distance 5 associated with an allowed area may instead indicate the smallest allowed distance between the route 1 within the allowed area and an outer edge of the said allowed area, e.g. any point on the outer edge of the allowed area or the safety distance is associated with a specific point on said outer edge. The safety distance 5, or several different safety distances, may be presented in the map 2, e.g. as graphical representation(s). If the obstacle or allowed area is moving, a safety distance associated with the obstacle or allowed area may be dependent on said movement. The safety distance could, for instance, be defined for individual obstacles or in general for all obstacles. When the obstacle is dynamic, the distance might not be absolute but rather depend on time or speed of the obstacle.

Figure 2 illustrates a system 10 and a user U interacting with, including input 16 to, the system 10. The system 10 comprises the UI 11 and the processing device 12. The UI 11 is able to present the map 2 to the user U, typically by means of graphics on a screen of a GUI 11. The UI 11 may comprise a touchscreen and/or other input device, e.g. a keyboard and/or pointing device and/or voice input device such as a microphone, for enabling the user U to input information, here called input 16, via the UI 11 to the system 10, typically to the processing device 12. In some embodiments of the present invention, the UI 11 is located on the ship 3, implying that also the user U may be on the ship. However, in some other embodiments of the present invention, the UI 11 and/or the user U may be located remotely from the ship 3, e.g. communicating with the ship from a remote location.

The processing device 12 comprises processing circuitry 13 e.g. a central processing unit (CPU). The processing circuitry 13 may comprise one or a plurality of processing units in the form of microprocessor(s). However, other suitable devices with computing capabilities could be comprised in the processing circuitry 13, e.g. an application specific integrated circuit (ASIC), a field programmable gate array (FPGA) or a complex programmable logic device (CPLD). The processing circuitry 13 is configured to run one or several computer program(s) or software (SW) 15 stored in a storage 14 of one or several storage unit(s) e.g. a memory. The storage unit is regarded as a computer readable means, forming a computer program product together with the SW 15 stored thereon as computer-executable components, and may e.g. be in the form of a Random Access Memory (RAM), a Flash memory or other solid state memory, or a hard disk, or be a combination thereof. The processing circuitry 13 may also be configured to store data in the storage 14, as needed. The processing device may comprise or consist of local and/or remote computer(s), e.g. servers(s). In some embodiments, the processing device 12 is provided in a cloud by cloud computing.

Figure 3 illustrates some embodiments of a method for modifying the ship route 1. The method comprises, at a user interface 11, presenting S1 a map 2 comprising a proposed future route 1a for the ship 3. Via the user interface 11, the system 10 may then receive S2 input 16 from the user U, the input including at least one request for modifying a route property of the presented S1 route 1a and/or at least one request for modifying a predefined constraint on a ship property among a plurality of predefined constraints on ship properties. Typically, the at least one request comprises or consists of a/one request for modifying a/one route property of the presented S1 route 1a. Then, at a processing device 12, the proposed route is recalculated S3 based on the received S2 request(s) and on the predefined constraints on ship properties. The recalculated S3 route 1b is presented S4 on the map 2 at the user interface 11.

In some embodiments of the present invention, the method may further comprise, via the user interface 11, the system 10 receiving S5 further input 16 from the user U, wherein the further input includes either an acceptance of the recalculated S3 route or a further request for modifying a route property or one of the predefined constraints on ship properties.

Examples on route properties include any of: to which side of an obstacle 4 on the map 2 the route 1 should pass, a safety distance 5 to an obstacle 4 on the map 2, and to keep within or pass through an allowed area defined on the map 2. Thus, in some embodiments of the present invention, each of the at least one request is a request for modifying a route property which is anyone of: to which side of an obstacle 4 on the map 2, e.g. a moving obstacle or a stationary obstacle such as a shallow, island or islet, the route 1 should pass; a safety distance 5 to an obstacle 4 on the map 2, e.g. a moving obstacle such as another ship or a stationary obstacle such as a shoreline, shallow, island or islet; or to keep within or pass through an allowed area defined on the map 2.

Examples on ship properties, e.g. at any point along the route 1, which may have constraints predefined in the system 10, e.g. stored in the storage 14, include any of: forward speed of the ship 3, rotational speed (turning) of the ship 3, heading of the ship 3, acceleration of the ship 3, performance of a propeller of the ship 3, performance of a rudder of the ship 3, and performance of a power provider of the ship 3. The rotational speed can e.g. define how fast the ship is turning, turning radius, and/or degrees of change of heading per time unit. The performance of the propeller may e.g. define rounds per minute (rpm) and may correspond to the performance of a motor driving the propeller. The performance of the rudder may e.g. define with how many degrees it is inclined to its straight/non-inclined position. The power provider may e.g. be an electrical power source such as electrical generator or storage. For instance, an electrical motor may depend on the possible power output of an electrical power source.

The at least one request may include at least one request for modifying a predefined constraint on a ship property among a plurality of predefined constraints on ship properties. Each of said constraints may e.g. be or include a maximum and/or a minimum or a range of operation. For example, a constraint on the forward speed of the ship 3 may define a speed range within which the ship can, or is allowed to, travel. A constraint on the rotational speed of the ship may define how fast the ship can or is allowed to turn, e.g. the constraint defining a minimum turning radius or a maximum number of degrees per time unit. Regarding heading, a constraint could specify that if the ship is generally heading in one direction (e.g. East) it is prevented from heading in a direct opposite direction thereto (e.g. West).

A constraint on the acceleration, e.g. in longitudinal (surge) direction, may specify a maximum acceleration possible or allowed for the ship 3. For instance, a maximum allowed acceleration may be set to prevent sea sickness or to prevent loss of cargo, e.g. containers, at sea. For this, it may be desirable to consider forward and/or rotational acceleration in several or all degrees of freedom, e.g. accelerations in surge, sway and/or yaw as well as rotations in roll, pitch and/or yaw.

A constraint on the performance of a propeller, and/or a motor, may e.g. specify an rpm operating range. A constraint on the performance of a rudder may e.g. specify an operating range in degrees, e.g. ± 15°. A constraint on the performance of a power provider may e.g. specify a maximum power output of the power provider. For all of these performance variables, there may be an operating range, such as min and max rpm, but there may also be a maximum increase and/or decrease rate, i.e. how fast the variable can change, or a range that should be avoided. For a propeller, if it is accelerated too fast, it starts cavitating and slipping. For a power provider, such as a diesel generator, if it is accelerated too fast, it may start stalling, the electrical network frequency may drop too low or the emissions may be too high. Generally, it is desirable to plan routes which the ship 3 is able to perform, while taking into account any limited capabilities of the actuators and power producers in both steady state and dynamic situations.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A method of modifying a ship route (1), the method comprising:
at a user interface (11), presenting (S1) a map (2) comprising a proposed future route (1a) for a ship (3);
via the user interface (11), receiving (S2) input (16) from a user (U), the input including at least one request for modifying a route property of the presented (S1) route (1a) and/or at least one request for modifying a predefined constraint on a ship property among a plurality of predefined constraints on ship properties;
at a processing device (12), recalculating (S3) the proposed route based on the received (S2) request(s) and on the predefined constraints on ship properties; and
at the user interface (11), presenting (S4) the recalculated (S3) route (1b) on the map (2).

2. The method of claim 1, further comprising:
via the user interface (11), receiving (S5) further input (16) from the user (U), the further input including either an acceptance of the recalculated (S3) route or a further request for modifying a route property or one of the predefined constraints on ship properties.

3. The method of any preceding claim, wherein each of the at least one request is a request for modifying a route property which is anyone of:
to which side of an obstacle (4) on the map (2), e.g. a moving obstacle or a stationary obstacle such as a shallow, island or islet, the route (1) should pass;
a safety distance (5) to an obstacle (4) on the map (2), e.g. a moving obstacle or a stationary obstacle such as a shoreline, shallow, island or islet; or
to keep within or pass through an allowed area defined on the map (2).

4. The method of claim 3, wherein the obstacle (4) is a virtual obstacle defined by the user (U) on the map (2).

5. The method of any preceding claim, wherein each of the predefined constraints is a constraint on a ship property which is anyone of:
forward speed of the ship (3);
rotational speed of the ship (3);
heading of the ship (3);
acceleration of the ship (3);
performance of a propeller of the ship (3);
performance of a rudder of the ship (3); or
performance of a power provider of the ship (3).

6. The method of any preceding claim, wherein each of the predefined constraints is stored in a storage (14) of the processing device (12).

7. A processing device (12) comprising:
processing circuitry (13); and
storage (14) storing instructions (15) executable by said processing circuitry to cause a system (10) comprising the processing device to perform the method of any preceding claim.

8. A system (10) comprising:
the processing device (12) of claim 7, and
the user interface (11).

9. A computer program product (14) comprising computer-executable components (15) for causing a system (10) to perform the method of any one of claims 1-6 when the computer-executable components are run on processing circuitry (13) comprised in the system.
